# EUROPEAN PATENT SPECIFICATION

(11) **EP 1 057 608 B1**
(45) Date of publication and mention of the grant of the patent: **03.04.2002**
(21) Application number: 00110967.7
(22) Date of filing: 26.05.2000
(51) Int. Cl.: B29C 44/06, B29C 43/14, B29C 43/20, B29C 67/00

(54) **Thermoplastic foam with an integral skin, container and shock absorbing material made from the same**
Integralschaumkörper mit einer Haut, sowie aus diesem Material hergestellter Behälter und stossabsorbierendes Material
Mousse composite à peau integrée, recipient et matière absorbant les chocs formés à partir de celui-ci

(30) Priority: 01.06.1999 JP 15435299
(43) Date of publication of application: 06.12.2000
(73) Proprietor: JSP CORPORATION, Tokyo 100-8580 (JP)
(72) Inventor: Kogure, Naochika, Utsunomiya-shi, Tochigi-ken 321-0106 (JP); Gokuraku, Hiroyuki, Tochigi-ken 321-2335 (JP); Kitahama, Takashi, Utsunomiya-shi, Tochigi-ken 320-0856 (JP)
(74) Representative: Müller-Gerbes, Margot, Dipl.-Ing.

(56) References cited:
- DE-A- 4 201 318
- FR-A- 2 025 179
- US-A- 5 273 702
- PATENT ABSTRACTS OF JAPAN vol. 1995, no. 02, 31 March 1995 (1995-03-31) & JP 06 312449 A (SHOWA DENKO KK), 8 November 1994 (1994-11-08)

## Description

### BACKGROUND OF THE INVENTION

### Field of the Invention:

The present invention relates to a skin-bearing expansion-molded article of a thermoplastic resin, which has a skin formed of a thermoplastic polymer, contains a foam on the inner side of the skin and is used as, for example, a light-weight heat insulating panel utilized for a floor, door or the like, a pallet, a container, an automotive member, or the like.

### Description of the Background Art:

Skin-bearing expansion-molded articles of a thermoplastic resin, which are obtained by forming a skin composed of a thermoplastic resin on the surface of a thermoplastic resin foam and have various shapes, have heretofore been publicly known. For example, as a process for obtaining such a skin-bearing expansion-molded article, it is publicly known a process in which a molded product of a hollow structure is formed from a non-foamed synthetic resin, and a polyurethane foam or foamed beads are then poured and filled into the cavity within the molded article (Japanese Patent Publication No. 10217/1983, Japanese Patent Application Laid-Open No. 339979/1994, etc.). However, this process has involved problems that the production process of the skin-bearing expansion-molded article becomes complicated, and a special molding machine is required, since a step of forming the skin and a step of forming the expansion-molded article are separately conducted. It has hence been difficult to provide the skin-bearing expansion-molded article on the cheap.

There has also been proposed a process in which a cylindrical multi-layer foamed parison with a non-foamed resin layer provided on the outer side of a foamed resin layer is molded while compressing it in a mold to cause the foamed layer on the inner side of the parison to be fusion-bonded to each other, thereby obtaining a skin-bearing expansion-molded article (Japanese Patent Publication No. 27978/1987, Japanese Patent Application Laid-Open No. 312449/1994, etc.). According to this process, the skin-bearing expansion-molded article can be obtained without passing through a complicated process. However, the molded article tends to cause cell collapse of the foam and formation of open cells at the fusion-bonded surface because the foamed layer of the multi-layer parison is caused to be directly fusion-bonded. As a result, the expansion-molded article has had a possibility that problems such as shrinkage and deformation of the molded article may arise. In particular, when the density of the foamed layer making up the multi-layer parison is made low, the above-described problems are easy to arise to a particularly marked extend. Therefore, this process has involved a problem that it is hard to provide any skin-bearing expansion-molded article which is light-weight and has excellent properties.

### SUMMARY OF THE INVENTION

The present invention has been completed in view of the above-described problems involved in the prior art, and has as its object the provision of a skin-bearing expansion-molded article of a thermoplastic resin, which can be produced by a simple process and is excellent in lightweight property, mechanical strength, heat insulating property, cushioning property, damping property, appearance, etc.

According to the present invention, there is thus provided a skin-bearing expansion-molded article of a thermoplastic resin, which is formed by holding a cylindrical multi-layer foamed parison comprising a foamed thermoplastic resin layer and thermoplastic polymer layers situated on both outer and inner sides of the foamed layer in a mold to compression-mold it, wherein the molded article has a skin formed of the outer-side polymer layer of the multi-layer foamed parison on the surface thereof, and on the inner side of the skin, a core formed by fusion-bonding at least a part of the inner-side polymer layer of the multi-layer foamed parison to each other and a foam formed of the foamed layer of the multi-layer foamed parison.

The expansion-molded article according to the present invention may include a molded article having a skin thickness of 100 µm to 10 mm and a core thickness of at least 100 µm. The expansion-molded article according to the present invention may also include a molded article having a density of 20 to 800 kg/m³. In the expansion-molded article according to the present invention, the core formed by fusion-bonding at least a part of the inner-side polymer layer of the multi-layer foamed parison to each other may have a void portion at which the inner-side polymer layer has not been fusion-bonded to each other, and the area ratio of the fusion-bonded portion in the core may preferably be at least 25%, more preferably at least 60%, particularly preferably 80 to 100%. The skin-bearing expansion-molded article according to the present invention may further include a molded article the foam, skin and core of which are each formed of a polyolefin resin. In particular, the foam, skin and core may preferably be each formed of a polypropylene resin having a melt tension of 5 to 30 cN. The expansion-molded article according to the present invention may still further include a molded article the thermoplastic polymer forming the skin of which is at least one selected from among olefin elastomers, styrene elastomers and high-impact polystyrene.

According to the present invention, there is also provided a container formed of the skin-bearing expansion-molded article of the thermoplastic resin described above and having a density of 30 to 400 kg/m³, a skin thickness of 200 µm to 3 mm and a core thickness of at least 100 µm.

According to the present invention, there is further provided a shock-absorbing material for automobile formed of the skin-bearing expansion-molded article of the thermoplastic resin described above and having a density of 25 to 300 kg/m³, a skin thickness of 200 µm to 7 mm and a core thickness of at least 200 µm.

According to the present invention, there is still further provided a structural member for automobile formed of the skin-bearing expansion-molded article of the thermoplastic resin described above. The structural member for automobile may be a member selected from among a bumper, pillar, instrument panel, spoiler, fender, side step, door trim, grille guard and trunk board.

### BRIEF DESCRIPTION OF THE DRAWINGS

The above and other objects, features and advantages of the present invention will become apparent from the following description and the appended claims, taken in conjunction with the accompanying drawings, in which:
Figs. 1A and 1B illustrate an example of the skin-bearing expansion-molded article according to the present invention, Fig. 1A is a perspective view of the appearance thereof, and Fig. 1B is a cross-sectional view taken along line B-B in Fig. 1A.
Fig. 2 illustrates a multi-layer foamed parison.
Figs. 3 and 4 illustrate how to produce the skin-bearing expansion-molded article.
Fig. 5 is a cross-sectional view illustrating a skin-bearing expansion-molded article according to an embodiment of the present invention.
Fig. 6 is a cross-sectional view illustrating a skin-bearing expansion-molded article according to another embodiment of the present invention.
Fig. 7 is a cross-sectional view illustrating a skin-bearing expansion-molded article according to a further embodiment of the present invention.
Fig. 8 is a cross-sectional view illustrating a skin-bearing expansion-molded article according to a still further embodiment of the present invention.

### DETAILED DESCRIPTION OF THE PREFERRED EMBODIMENTS

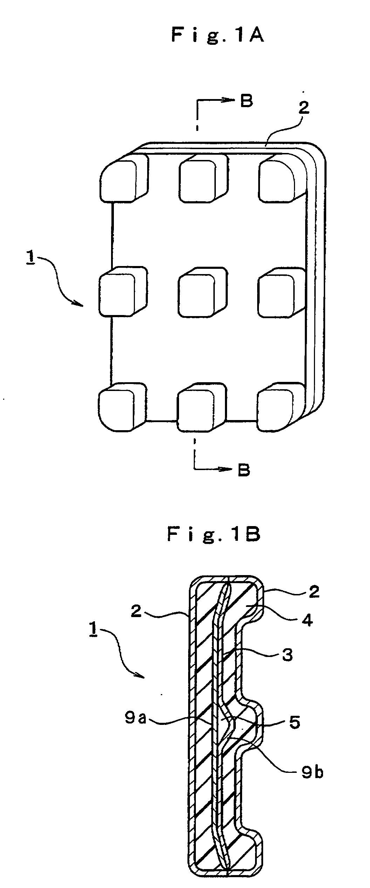

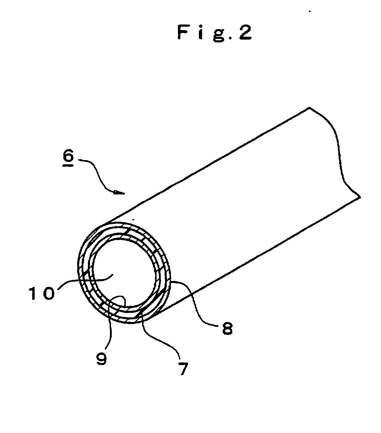

Figs. 1A and 1B illustrate an example of the skin-bearing expansion-molded article 1 of the thermoplastic resin (hereinafter may be referred to as the "skin-bearing expansion-molded article" simply) according to the present invention. As illustrated in Figs. 1A and 1B, the skin-bearing expansion-molded article 1 according to the present invention has a skin 2, and a core 3 and a foam 4 in the interior of the skin 2. In Fig. 1B, reference numeral 5 indicates a void portion. The skin-bearing expansion-molded article 1 according to the present invention is obtained by holding a cylindrical multi-layer foamed parison 6 (hereinafter may be referred to as the "multi-layer parison" or "parison" simply) composed of a foamed thermoplastic resin layer 7, an outer-side thermoplastic polymer layer 8 provided on the outer side of the foamed layer 7 and an inner-side thermoplastic polymer layer 9 provided on the inner side of the foamed layer 7 and having a hollow portion 10 as illustrated in Fig. 2 in a mold to compression-mold it. Incidentally, the term "parison" as used in the present invention means a tubular or any other hollow plastic formed or molded article obtained by extrusion, injection molding or the like and such that used in molding such as blow molding. The outer-side polymer layer 8 and the inner-side polymer layer 9 are preferably formed of a non-foamed polymer or a foamed polymer having a density of at least 0.4 g/cm³. An inorganic substance may be contained in these polymer layers to improve their stiffness, heat resistance, flame retardant and the like.

The skin 2 of the skin-bearing expansion-molded article 1 according to the present invention corresponds to the outer-side polymer layer 8 of the multi-layer parison 6, and the core 3 corresponds to the inner-side polymer layer 9 of the multi-layer parison 6. Examples of thermoplastic polymers used in the outer-side polymer layer 8 and the inner-side polymer layer 9 of the parison 6 include polyethylene resins such as low density polyethylene (LDPE), high density polyethylene (HDPE), linear low density polyethylene (LLDPE); polypropylene resins such as homopolypropylene, ethylene-propylene random copolymers, ethylene-propylene block copolymers, butene-propylene random copolymers, butene-propylene block copolymers and ethylene-butene-propylene random terpolymers; another polyolefin resins such as cyclic polyolefins; polystyrene resins such as polystyrene, high-impact polystyrene and acrylonitrile-butadiene-styrene terpolymers; polycarbonate resins; acrylic resins; methacrylic resins; polyester resins; polyvinyl chloride resins; ethylene-vinylacetate copolymers; polyamide resins; acrylonitrile resins; styrene elastomers; olefin elastomers; urethane elastomers; and polyester elastomers. These polymers may be used in combination.

Examples of thermoplastic resins used in the foamed thermoplastic resin layer include polyethylene resins such as low density polyethylene (LDPE), high density polyethylene (HDPE), linear low density polyethylene (LLDPE); polypropylene resins such as homopolypropylene, ethylene-propylene random copolymers, ethylene-propylene block copolymers, butene-propylene random copolymers, butene-propylene block copolymers and ethylene-butene- propylene random terpolymers; another polyolefin resins such as cyclic polyolefins; polystyrene resins such as polystyrene, high-impact polystyrene and acrylonitrile- butadiene-styrene terpolymers; polycarbonate resins; acrylic resins; methacrylic resins; polyester resins; polyvinyl chloride resins; ethylene-vinylacetate copolymers; polyamide resins; and acrylonitrile resins. These resins may be used in combination.
In particular, the outer-side polymer layer 8 and the inner-side polymer layer 9 are preferably formed with a polystyrene resin, polyethylene resin or polypropylene resin, which has a melt tension of 5 to 30 cN, since a molded article having excellent appearance can be provided. Incidentally, the foam, skin and core are preferably composed of the same kind of resin taking recycling and bonding properties into account. The melt tension (MT) of the polypropylene resin can be measured, for example, according to a melt tension tester Model II, made by Toyo Seiki Seisaku-Sho, Ltd. and the like. More particularly, a melt tension tester having an orifice with an orifice diameter of 2.095 mm and a length of 8 mm is used, and a resin is extruded from the orifice in the form of a string under conditions of a resin temperature of 230°C and a piston speed of 10 mm/minute. This string-shaped material is wound about a tension detecting pulley having a diameter of 45 mm and taken up by means of a take-up roller with a diameter of 50 mm while gradually increasing the take-up speed at a rate of 5 r.p.m./second (take-up acceleration rate of the string: 1.3 × 10⁻² m/second²).

In the invention, in order to determine the melt tension (MT), the take-up rate is increased until the string-shaped material on the tension-detecting pulley is broken to obtain a take-up rate R (r.p.m.) at which the string is broken. Next, the take-up operation is repeated at a constant take-up rate of R × 0.7 (r.p.m.), during which the melt tension (MT) of the string, which is detected by means of a detector connected to the tension detecting pulley, is measured as a function of time, followed by depiction of MT (gf) along the ordinate and the time (second) along the abscissa, thus obtaining a graphic chart. The MT in the invention is determined as a median of the amplitudes at a portion where the amplitudes become stable. It will be noted that where the string is not broken even when the take-up rate reaches at 500 (r.p.m.), a value, which is obtained at a take-up rate of 500 (r.p.m.), is defined as the melt tension (MT) of the string. It will also be noted that a specific amplitude which unusually occurs is neglected.

The outer-side polymer layer 8 is preferably formed with an olefin elastomer, styrene elastomer or high-impact polystyrene, since the impact resistance of the resulting molded article is improved.

The outer-side polymer layer 8 may also be formed with a mixture obtained by suitably compounding various additives such as a foam stabilizer, an infrared absorber, an infrared reflecting agent, a flame retardant, a flowability improver, a weathering stabilizer, a colorant, a heat stabilizer, an antioxidant, a filler and rubber into any one of the above-mentioned polymers or a mixture of two or more thereof as needed.

The thickness of the skin 2 in the skin-bearing expansion-molded article 1 according to the present invention is preferably 100 µm to 10 mm, more preferably 100 µm to 7 mm. If the thickness of the skin is too small, the molded article 1 has a possibility that the surface smoothness thereof may be deteriorated to make the surface appearance thereof poor. If the thickness of the skin 2 is too great, the whole weight of the molded article 1 becomes heavy, so that its lightweight property is impaired according to the use of the molded article 1, and moreover the closed cell content in the foamed layer may lower in some cases. More specifically, since the polymer layer and the foamed layer are simultaneously extruded through a co-extrusion die by a co-extrusion process, the quantity of heat of a molten resin forming the polymer layer becomes high when the thickness of the skin is great, in other words, the thickness of the polymer layer is great, so that the foamed layer is heated by such heat, and the viscosity of the resin forming the foamed layer is lowered to fail to maintain cells, resulting in lowering of the closed cell content in the foamed layer.

The core 3 in the skin-bearing expansion-molded article 1 is formed by fusion-bonding at least a part of the inner-side polymer layer 9 of the multi-layer parison 6 to each other. The core 3 is preferably formed so as to give a thickness of at least 100 µm, more preferably 200 µm to 10 mm, particularly preferably 200 µm to 7 mm. In order to form the core 3 so as to have a thickness within the above range, it is only necessary to form the inner-side polymer layer 9 so as to have a thickness about half the intended thickness of the core 3 when the polymer layer 9 is a non-foamed layer. When the inner-side polymer layer 9 is a foamed layer on the other hand, it is only necessary to control the thickness of the polymer layer 9 in view of a thickness decreased by compression upon the molding of the parison 6, so as to give a thickness with such a thickness for the compression added to a thickness about half the thickness of the core 3 to be formed. As illustrated in Fig. 1B, the core 3 in the molded article 1 according to the present invention may have a void portion 5 defined due to a portion of the inner-side polymer layer 9 of the multi-layer parison 6, which has not been fusion-bonded to each other. When the core 3 has the void portion 5 in the present invention, the thickness of the core 3 is defined as the total thickness of portions 9a and 9b corresponding to the inner-side polymer layer of the multi-layer parison 6, excluding the thickness of the void portion 5.

Even if the cells in the foamed layer 7 about the fusion-bonded portion of the inner-side polymer layer 9 are made open cells in the course of the fusion bonding of the inner-side polymer layer 9 to each other in the molding of the multi-layer parison 6, the polymer layer 9 existing on the inner side of the foamed layer 7 fulfills a rib-like function to have an effect of preventing the resulting molded article from shrinking and/or deforming. However, when the thickness of the inner-side polymer layer 9 in the multi-layer parison 6 is such that the thickness of the core 3 to be formed becomes smaller than 100 µm, the rib-like function by the inner-side polymer layer 9 is lowered, resulting in a possibility that the resulting molded article may tend to undergo shrinkage and/or deformation.

In the skin-bearing expansion-molded article 1 according to the present invention, the density of the foam 4 is preferably 20 to 500 kg/m³, more preferably 25 to 400 kg/m³. If the density of the foam 4 exceeds 500 kg/m³, the lightweight property and physical properties such as heat insulating property of the molded article may be possibly deteriorated. If the density of the foam 4 is lower than 20 kg/m³ on the other hand, the cell membrane becomes too thin, so that cells are broken to increase open cell portions, resulting in a possibility that the physical properties of the molded article may be deteriorated. The thickness of the foam 4 is preferably at least 3 mm, more preferably 4 to 300 mm.

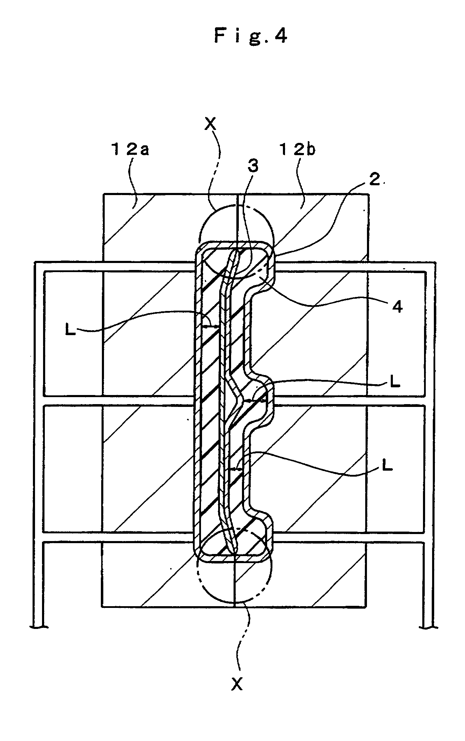

The density of the foam 4 in the skin-bearing expansion-molded article 1 can be determined in accordance the following some methods. For example, a method in which the skin 2 and the core 3 are removed from the skin-bearing expansion-molded article 1 to take out only the foam 4, and the density of the foam 4 thus cut out is determined is mentioned. Besides, the thicknesses of the skin 2 and the core 3 can be determined from a vertical section of the molded article 1. In this case, the measurement may also be conducted by enlarging the section of the molded article 1 through a microscope as needed, and using an enlarged projection drawing. Since the density of the foam may vary according to the place measured, the density of the foam 4 is determined by selecting a place good in cell condition, in which the total thickness of the skin, core and foam in the vertical section of the molded article is at least 5 mm. The thickness of the foam 4 can be measured from the section of the molded article 1. In this case, the perpendicular line length (L in Fig. 4) between the skin and the core is regarded as the thickness of the foam 4. However, the thickness of portions of the foam 4 situated at the upper and lower, and right and left peripheries of the expansion-molded article 4 near mold clamps for the parison (X in Fig. 4) naturally becomes small, and so it is preferred that the thickness of another main portion than those near the clamps should fall within the above range.

The density of the skin-bearing expansion-molded article 1 according to the present invention is generally 20 to 800 kg/m³, preferably 25 to 400 kg/m³. If the density of the expansion-molded article 1 exceeds 800 kg/m³, the lightweight property and heat insulating property of the molded article may be possibly be deteriorated. If the density of the molded article 1 is lower than 20 kg/m³ on the other hand, the mechanical properties such as compressive strength of the molded article may be possible deteriorated.

The density of the skin-bearing expansion-molded article 1 is a value determined by measuring its volume by, for example, sinking the molded article 1 in water, and dividing the weight of the molded article by this volume. Incidentally, the volume of the molded article 1 is a volume including the void portion 5 within the molded article 1.

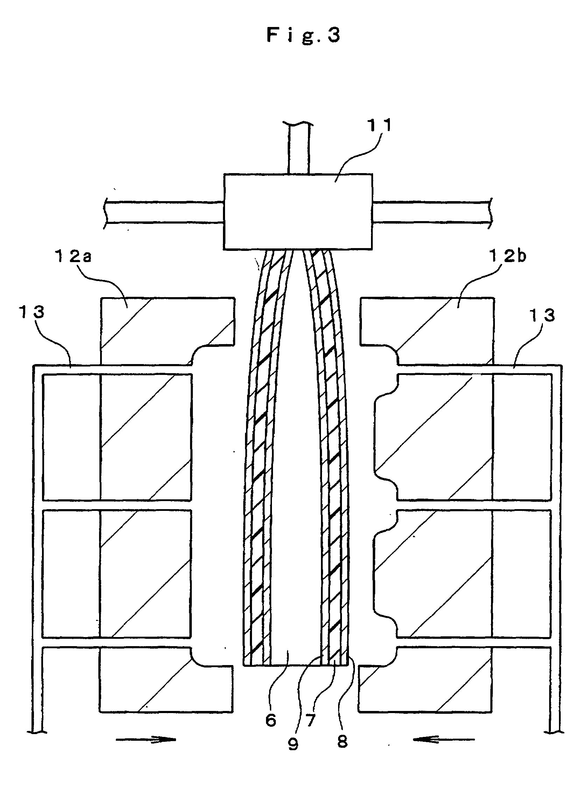

Figs. 3 and 4 illustrate how to produce the molded article according to the present invention. In order to produce the multi-layer foamed parison 6, for example, base resins for forming the respective layers in the formation of the parison are separately melted and kneaded in extruders (not illustrated), and the resultant melts are extruded in a lower-pressure zone while causing them to join in a die 11 as illustrated in Fig. 3, thereby obtaining the multi-layer parison 6. An accumulator may be provided between the extruders and the die 11 or within the die 11 as needed. In order to form the foamed layer 7 in the multi-layer parison 6, a foaming agent is added to the above-exemplified thermoplastic resin upon the melting and kneading of the thermoplastic resin in the extruder. Any of inorganic foaming agents, volatile foaming agents and decomposable foaming agents may be used as the foaming agent. In order to obtain a foam having a high expansion ratio, however, it is preferable to use an inorganic foaming agent or volatile foaming agent. Examples of the inorganic foaming agent include nitrogen and carbon dioxide. Examples of the volatile foaming agent include aliphatic hydrocarbons such as propane, n-butane, isobutane, n-pentane, isopentane, n-hexane and isohexane; chlorinated hydrocarbons such as methyl chloride and ethyl chloride; and fluorinated hydrocarbons such as 1,1,1,2-tetrafluoroethane and 1,1-difluoroethane. Examples of the decomposable foaming agent include azodicarbonamide. The foaming agent mentioned above may be used in combination of two or more thereof. A decomposable foaming agent also having a function as a cell stabilizer may be used in combination with the inorganic foaming agent or volatile foaming agent.

In order to obtain the skin-bearing expansion-molded article 1 according to the present invention from the multi-layer foamed parison 6, a pair of split molds 12a, 12b is closed so as to hold the multi-layer foamed parison 6 formed by the extrusion through the die 11 from its both sides to mold the multi-layer parison 6. When the pair of split molds 12a, 12b is closed as illustrated in Fig. 3, the cavity surfaces of the molds 12a, 12b compress the multi-layer foamed parison 6 to gradually deform it into a flat form. When the closing of the molds 12a, 12b is completed as illustrated in Fig. 4, the parison 6 is surely compressed by the molds 12a, 12b into a flat form to obtain the skin-bearing expansion-molded article 1 according to the present invention with at least a part of the inner-side polymer layer of the parison 6 fusion-bonded to each other.

In the above-described process, when a pipe 13 for pressure reduction is provided in the molds 12a, 12b, as illustrated in Fig. 3, to conduct the molding while reducing the pressure, the outer surface (outer-side polymer layer 8) of the multi-layer parison 6 can be fully brought into close contact with the cavity surfaces of the molds 12a, 12b to obtain a molded article 1 having good surface profile. There is also adopted a process comprising closing an open end of the parison 6 by a parison pinch just after the extrusion of the multi-layer parison 6 through the die 11, blowing air into the parison to inflate it and then holding the inflated parison between the molds 12a, 12b as described above, thereby molding it.

Fig. 3 conceptually illustrates an example of the production of the skin-bearing expansion-molded article 1 according to the present invention, and the specific procedure, apparatus and the like for producing the skin-bearing expansion-molded article 1 according to the present invention are not limited to those illustrated.

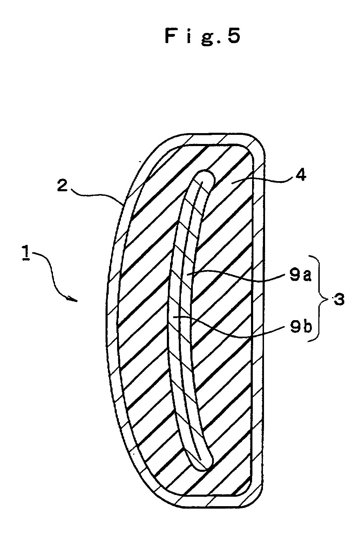

The skin-bearing expansion-molded article 1 according to the present invention is not limited to that having a void portion 5 in the core 3 and may include that the inner-side polymer layers 9a, 9b are completely fusion-bonded to each other as illustrated in Fig. 5. When a proportion of the fusion bonding in the core 3 is expressed by an area ratio (%) of the fusion-bonded portion, it is preferred from the viewpoint of achieving the intended objects that the area ratio of the fusion-bonded portion in the core 3 of the molded article 1 according to the present invention be at least 25%, preferably at least 60%, particularly preferably 80 to 100%. Incidentally, the area ratio of the fusion-bonded portion means a value determined in the following manner.

A method for determining the area ratio of the fusion-bonded portion will be described on the molded article illustrated in Figs. 1A and 1B. However, in the molded article illustrated in Fig. 1A, the right and left directions in the drawing correspond to the extrusion direction of the multi-layer parison. The skin-bearing expansion-molded article 1 is first divided into 10 equal pieces at a plane perpendicular to the extrusion direction of the multi-layer parison 6 used for producing the molded article. Fig. 1B illustrates a section of one piece among the 10 equal pieces. A length (mm) of a portion of the inner-side polymer layer forming the core 3 fusion-bonded to each other in one sectional surface (for example, when the right sectional surface is selected, the right sectional surface in all the cut pieces is selected to secure unity in selection of sectional surfaces to be measured. Namely, the measurement is conducted on 9 sectional surfaces) of each cut piece of the molded article is then determined. A value obtained by doubling this length is regarded as a length, L1 (mm) of the fusion-bonded portion. On the other hand, when a part of the inner-side polymer layer in the core 3 is not fusion-bonded to each other to form a void portion 5, a length of the inner circumferential edge of the void portion 5 is regarded as a length, L2 (mm) of the non-fusion-bonded portion. The length L1 of the fusion-bonded portion and the length L2 of the non-fusion-bonded portion are determined as the respective totals of all the fusion-bonded portions and all the non-fusion-bonded portions in the sectional surface. The area ratio (%) of the fusion-bonded portion is then found by [L1/(L1 + L2)] x 100. Incidentally, in a section in which the inner-side polymer layer is fusion-bonded to each other without void, the area ratio naturally amounts to 100%. An arithmetic mean of the area ratios of the fusion-bonded portion in the respective sectional surfaces is regarded as the area ratio (%) of the fusion-bonded portion in the skin-bearing expansion-molded article.

The skin-bearing expansion-molded article 1 according to the present invention is obtained by compression-molding the multi-layer foamed parison 6 comprising a foamed layer 7 and polymer layers 8, 9 situated on both outer and inner sides of the foamed layer 7 in a mold. When a base material for forming the foamed layer 7 in the multi-layer parison 6, and base materials for forming the polymer layers 8, 9 on both outer and inner sides of the foamed layer 7 each have high adhesion property, a skin-bearing expansion-molded article 1 obtained from such a multi-layer parison 6 has merits that the bond strength between a skin 2 and a foam 4, and the foam 4 and a core 3 in the molded article becomes high, and so such a molded article can be provided as a molded article having high mechanical strength, and that since the foamed layer 7 is fully bonded to the polymer layer 8, the outer-side polymer layer 8 is stretched together with the-foamed layer 7 upon the molding of the molded article 1, and so the thickness of the polymer layer 8 can be made evener, and moreover the molded article can be provided as an excellent skin-bearing expansion-molded article free of any shrinkage or deformation even when the expansion ratio of the foamed layer 7 of the multi-layer parison 6 is made higher.

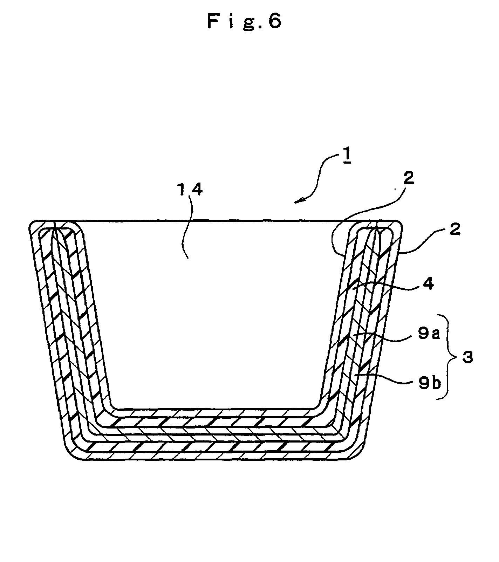

The skin-bearing expansion-molded article 1 according to the present invention can be utilized as a container or a shock-absorbing material for automobile. Fig. 6 is a cross-sectional view illustrating a container composed of the skin-bearing expansion-molded article 1 according to the present invention. In the molded article 1 illustrated in Fig. 6, a core 3 is formed by completely fusion-bonding the inner-side polymer layers 9a, 9b of a multi-layer foamed parison 6 to each other, and the parison is molded so as to define a container space 14. When the expansion-molded article 1 according to the present invention is used as a container, the density thereof is controlled to 30 to 400 kg/m³, thereby providing a container which is light-weight and excellent in heat insulating property. Besides, the thickness of the skin 2 is controlled to 200 to 3,000 µm, thereby providing a container having high durability and surface smoothness and well balanced between appearance and lightweight property. Further, when a multi-layer parison 6 formed in such a manner that the thickness of the inner-side polymer layer 9 is such that the thickness of the core 3 in the resulting molded article 1 will amount to at least 100 µm is used, a molded article 1 obtained by molding such a multi-layer parison 6 undergoes only minimal shrinkage and has excellent mechanical strength against external force.

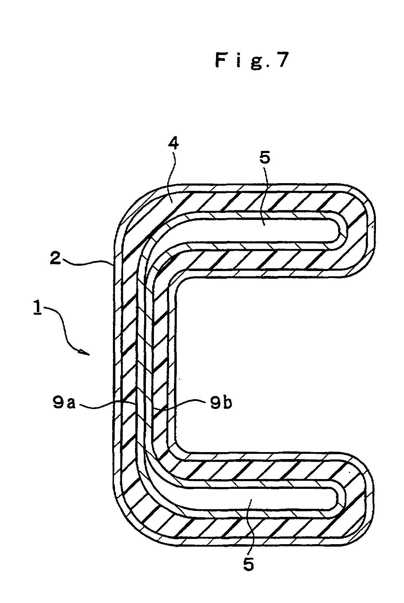

Fig. 7 is a vertical sectional view of an automotive bumper illustrated as a specific example of a shock-absorbing material for automobile formed of the skin-bearing expansion-molded article 1 according to the present invention. The expansion-molded article 1 illustrated in Fig. 7 is obtained by compression-molding the multi-layer foamed parison 6 into a U-shaped section, and has a core 3 in which the inner-side polymer layers 9a, 9b of the multi-layer parison 6 are fusion-bonded to each other at the central portion of the molded article 1 and not fusion-bonded to form void portions 5 at both upper and lower side portions. When the skin-bearing expansion-molded article 1 according to the present invention is used as a shock- absorbing material for automobile such as the above-described bumper, the density thereof is controlled to 25 to 300 kg/m³, thereby providing a shock-absorbing material which is light-weight and excellent in energy- absorbing efficiency. Besides, the thickness of the skin 2 is controlled to 200 to 7,000 µm, thereby providing a shock-absorbing material having excellent surface smoothness and impact resistance. Further, when the thickness of the core 3 is controlled so as to amount to at least 200 µm, thereby providing a shock-absorbing material having excellent dimensional stability and greatly improved mechanical strength. The volume of the shock-absorbing material formed of the molded article according to the present invention is preferably 5,000 cm³ to 400,000 cm³.

The present invention will hereinafter be described in more detail by the following Examples.

### Example 1:

Polypropylene (melt tension: 19 cN) containing a cell stabilizer is fed to an extruder and melted and kneaded, and a volatile foaming agent (a mixture containing isobutane and n-butane at a weight ratio of 35:65) in an amount shown in Table 1 was forced into the polypropylene from the middle of the extruder and kneaded to prepare a foamable melt for forming a foamed layer of a multi-layer parison. On the other hand, in order to form polymer layers on both outer and inner sides of the multi-layer parison, polypropylene (melt tension: 19 cN) was fed to separate extruders and melted and kneaded to prepare non-foamable melts. The melts melted and kneaded in the respective extruders were then charged into separate accumulators. After completion of the charging, the foamable melt for forming the foamed layer of the multi-layer parison, and the non-foamable melts for forming the inner-side polymer layer and the outer-side polymer layer were injected from the respective accumulators to causing them to join in a die, and extruded through the die to expand the foamable melt to obtain a multi-layer foamed parison with the polymer layers composed of the non-foamed resin laminated on both inner and outer surfaces of the foamed layer.

The multi-layer parison thus extruded was then compressed by means of such a pair of split molds as illustrated in Fig. 3, and the pressure within the mold was reduced by absorption from pipes 13 to bring the multi-layer parison into close contact with the cavity surfaces of the molds, thereby molding it. Thereafter, the resultant molded article was cooled and released from the mold to obtain a skin-bearing expansion-molded article. The molded article thus obtained had good appearance free of any shrinkage or deformation. The molded article was cut to observe its section. As a result, the molded article was found to have a skin formed of the outer-side polymer layer of the multi-layer foamed parison at the surface, and a core formed of the inner-side polymer layer of the multi-layer foamed parison and a foam corresponding to the foamed layer of the multi-layer foamed parison on the inner side of the skin. An area ratio of the fusion- bonded portion in the core of this molded article was determined, and the result thereof is shown in Table 1. Various physical properties such as the thicknesses of the skin and core of the molded article, and the density of the molded article are shown collectively in Table 1.

### Example 2:

A multi-layer parison obtained in the same manner as in Example 1 except that low density polyethylene was used as a base material for the foamed layer, and outer-side and inner-side polymer layers of the multi-layer parison, and having non-foamed polymer layers on both inner and outer sides of the foamed layer was molded in the same manner as in Example 1. As a result, a molded article having good appearance was obtained. A section of this molded article was observed, and it was found that the inner-side polymer layer of the multi-layer parison was fusion-bonded to each other to form a core. Various physical properties such as the thicknesses of the skin and core of the molded article, and the density of the molded article are shown collectively in Table 1.

### Example 3:

A multi-layer parison obtained in the same manner as in Example 1 except that polypropylene (melt tension: 19 cN) was used as a base material for the foamed layer and inner-side polymer layer of the multi-layer parison, and a thermoplastic olefin elastomer was used as a base material for the outer-side polymer layer, and having non-foamed polymer layers on both inner and outer sides of the foamed layer was molded in the same manner as in Example 1. As a result, a molded article having good appearance was obtained. A section of this molded article was observed, and it was found that the inner-side polymer layer of the multi-layer parison was fusion-bonded to each other to form a core. Various physical properties such as the thicknesses of the skin and core of the molded article, and the density of the molded article are shown collectively in Table 1.

### Example 4:

A multi-layer parison obtained in the same manner as in Example 1 except that polystyrene was used as a base material for the foamed layer of the multi-layer parison, high-impact polystyrene was used as a base material for the outer-side and inner-side polymer layers of the multi-layer parison, and isobutane was used as a foaming agent for forming the foamed layer, and having non-foamed polymer layers on both inner and outer sides of the foamed layer was molded in the same manner as in Example 1. As a result, a molded article having good appearance was obtained. A section of this molded article was observed, and it was found that the inner-side polymer layer of the multi-layer parison was fusion-bonded to each other to form a core. Various physical properties such as the thicknesses of the skin and core of the molded article, and the density of the molded article are shown collectively in Table 1.

### Example 5:

A multi-layer parison obtained in the same manner as in Example 1 except that polystyrene was used as a base material for the foamed layer of the multi-layer parison, a mixture containing high-impact polystyrene and a styrene elastomer at a weight ratio of 70/30 was used as a base material for the outer-side polymer layer of the multi-layer parison, high-impact polystyrene was used as a base material for the inner-side polymer layer, and isobutane was used as a foaming agent for forming the foamed layer, and having non-foamed polymer layers on both inner and outer sides of the foamed layer was molded in the same manner as in Example 1. As a result, a molded article having good appearance was obtained. A section of this molded article was observed, and it was found that the inner-side polymer layer of the multi-layer parison was fusion-bonded to each other to form a core. Various physical properties such as the thicknesses of the skin and core of the molded article, and the density of the molded article are shown collectively in Table 1.

### Example 6:

A multi-layer parison obtained in the same manner as in Example 1 except that polystyrene was used as a base material for the foamed layer of the multi-layer parison, a mixture containing low density polyethylene, polystyrene and a styrene elastomer at a weight ratio of, 65.5/35.5/9 was used as a base material for the outer-side polymer layer of the multi-layer parison, high-impact polystyrene was used as a base material for the inner-side polymer layer, and isobutane was used as a foaming agent for forming the foamed layer, and having non-foamed polymer layers on both inner and outer sides of the foamed layer was molded in the same manner as in Example 1. As a result, a molded article having good appearance was obtained. A section of this molded article was observed, and it was found that the inner-side polymer layer of the multi-layer parison was fusion-bonded to each other to form a core. Various physical properties such as the thicknesses of the skin and core of the molded article, and the density of the molded article are shown collectively in Table 1.

### Example 7:

A multi-layer parison obtained in the same manner as in Example 1 except that polystyrene was used as a base material for the foamed layer of the multi-layer parison, high-impact polystyrene was used as a base material for the outer-side and inner-side polymer layers of the multi-layer parison, and isopentane was used as a foaming agent for forming the foamed layer, and having non-foamed polymer layers on both inner and outer sides of the foamed layer was molded in the same manner as in Example 1. As a result, a molded article having good appearance was obtained. A section of this molded article was observed, and it was found that the inner-side polymer layer of the multi-layer parison was fusion-bonded to each other to form a core. Various physical properties such as the thicknesses of the skin and core of the molded article, and the density of the molded article are shown collectively in Table 1.

### Example 8:

A multi-layer parison obtained in the same manner as in Example 1 except that polystyrene was used as a base material for the foamed layer of the multi-layer parison, a styrene elastomer was used as a base material for the outer-side polymer layer of the multi-layer parison, a mixture containing high-impact polystyrene, polystyrene and a styrene elastomer at a weight ratio of 10/47/43 was used as a base material for the inner-side polymer layer, and isobutane was used as a foaming agent for forming the foamed layer, and having non-foamed polymer layers on both inner and outer sides of the foamed layer was molded in the same manner as in Example 1. As a result, a molded article having good appearance was obtained. A section of this molded article was observed, and it was found that the inner-side polymer layer of the multi-layer parison was fusion-bonded to each other to form a core. Various physical properties such as the thicknesses of the skin and core of the molded article, and the density of the molded article are shown collectively in Table 1.

### Example 9:

A multi-layer parison obtained in the same manner as in Example 1 except that polystyrene was used as a base material for the foamed layer of the multi-layer parison, high-impact polystyrene was used as a base material for the outer-side and inner-side polymer layers of the multi-layer parison, and n-pentane was used as a foaming agent for forming the foamed layer, and having non-foamed polymer layers on both inner and outer sides of the foamed layer was molded in the same manner as in Example 1. As a result, a molded article having good appearance was obtained. A section of this molded article was observed, and it was found that the inner-side polymer layer of the multi-layer parison was fusion-bonded to each other to form a core. Various physical properties such as the thicknesses of the skin and core of the molded article, and the density of the molded article are shown collectively in Table 1.

### Example 10:

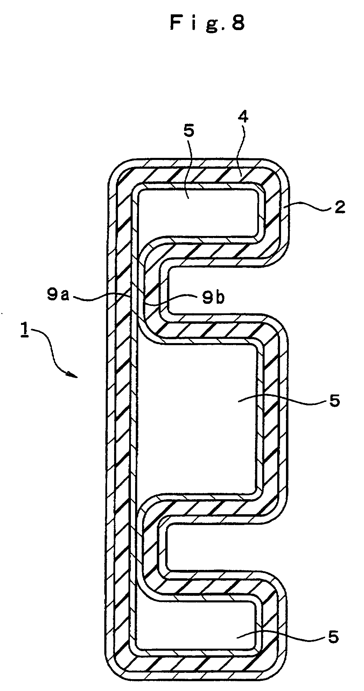

A multi-layer parison obtained in the same manner as in Example 1 except that polypropylene (melt tension: 22 cN) was used as a base material for the foamed layer of the multi-layer parison, polypropylene (melt tension: 8.5 cN) was used as a base material for the outer-side polymer layer of the multi-layer parison, polypropylene (melt tension: 22 cN) was used as a base material for the inner-side polymer layer, and isobutane was used as a foaming agent for forming the foamed layer, and having non-foamed polymer layers on both inner and outer sides of the foamed layer was molded in the same manner as in Example 1 to obtain a molded article in the form of a bumper having a shape illustrated in Fig. 8 in a section perpendicular to the extrusion direction. This molded article had good appearance. A section of this molded article was observed, and it was found that the inner-side polymer layer of the multi-layer parison was partially fusion-bonded to each other to form a core. Various physical properties such as the thicknesses of the skin and core of the molded article, and the density of the molded article are shown collectively in Table 1.

### Comparative Example 1:

Polypropylene containing a cell stabilizer is fed to an extruder, and butane as a volatile foaming agent was forced in an amount shown in Table 1 into the resin from the middle of the extruder and kneaded to prepare a foamable melt for forming a foamed layer of a multi-layer parison. On the other hand, in order to form polymer layers on the outer-side of the multi-layer parison, polypropylene which will become an outer-side polymer of the multi-layer parison was fed to an extruder and melted and kneaded to prepare a non-foamable melt. The melts melted and kneaded in the respective extruders were then charged into separate accumulators. The foamable melt for forming the foamed layer of the multi-layer parison, and the non-foamable melt for forming the outer-side polymer layer were injected from the respective accumulators to causing them to join in a die, and extruded through the die to expand the foamable melt to obtain a multi-layer foamed parison with the polymer layer composed of the non-foamed resin laminated only on the outer surface of the foamed layer.

The multi-layer parison thus extruded was then compressed by means of such a pair of split molds as illustrated in Fig. 3, and the pressure within the mold was reduced by absorption from pipes 13 to bring the multi-layer parison into close contact with the cavity surfaces of the molds, thereby molding it. Thereafter, the resultant molded article was cooled and released from the mold to obtain a skin- bearing expansion-molded article. The molded article thus obtained was observed undergoing shrinkage and deformation. The molded article was cut to observe its section. As a result, it was found that the foamed layer of the multi-layer foamed parison was fusion-bonded to each other at its inner surface, and the cells in the foamed layer at the fusion-bonded portion were broken. Various physical properties such as the thicknesses of the skin of the molded article, and the density of the molded article are shown collectively in Table 1.

### Comparative Example 2:

A multi-layer parison obtained in the same manner as in comparative Example 1 except that polystyrene was used as a base material for the foamed layer of the multi-layer parison, high-impact polystyrene was used as a base material for the outer-side polymer layer of the parison, and isobutane was used as a foaming agent for forming the foamed layer, and having a non-foamed polymer layer only on the outer side of the foamed layer was molded in the same manner as in Comparative Example 1. A molded article thus obtained had good appearance, but had vacant portions between the skin and the foamed layer as well as the interior of the foamed layer. When a portion of the molded article corresponding to the vacant portion was pushed from the outside, it was easily buckled and deformed. A section of the molded article was observed. As a result, it was found that the foamed layer of the multi-layer foamed parison was fusion- bonded to each other at its inner surface, and the cells in the foamed layer at the fusion-bonded portion were broken. Various physical properties such as the thicknesses of the skin of the molded article, and the density of the molded article are shown collectively in Table 1.

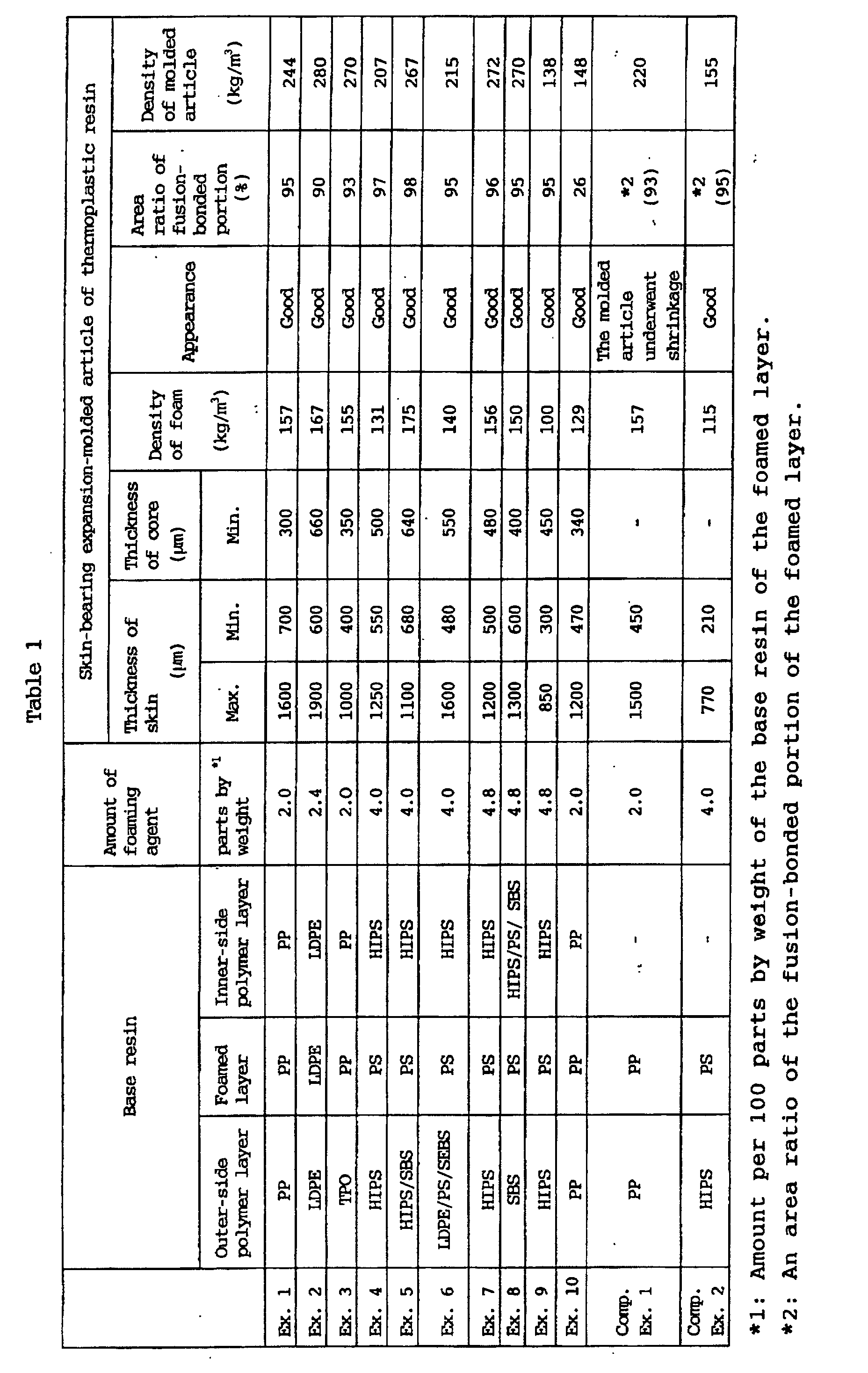

In Table 1, the abbreviations of the kinds of the base resins are as follows:
PP: polypropylene; LDPE: low density polyethylene; TPO: thermoplastic polypropylene elastomer; HDPE: high density polyethylene; SBS: styrene-butadiene-styrene block copolymer; SEBS: hydrogenated product of styrene-butadiene-styrene block copolymer; and HIPS: high-impact polystyrene.

As described above, the skin-bearing expansion-molded articles according to the present invention are excellent in lightweight property, mechanical strength, heat insulating property, cushioning property, damping property, etc. The various physical properties of the skin-bearing expansion-molded article can be suitably controlled according to the purpose thereof by selecting or adjusting the materials or thicknesses of the outer-side polymer layer of the multi-layer foamed parison, which will become the skin of the skin-bearing expansion-molded article according to the present invention, the inner-side polymer layer of the multi-layer parison, which will become the core, and the foamed layer of the multi-layer parison, which will become the foam, the density of the foamed layer, etc. Further, since the core is formed in the interior of the resulting skin-bearing expansion-molded article by fusion-bonding at least a part of the inner-side polymer layer to each other when the multi-layer parison having polymer layers on both inner and outer sides of the foamed layer polymer layers is molded to obtain the molded article according to the present invention, shrinkage and deformation in the molded article can be prevented. The skin-bearing expansion-molded articles according to the present invention can be utilized as light-weight heat insulating panels for floor, door or the like, pallets, containers, structural members for automobile, such as pillars, bumpers, instrument panels, spoilers, fenders, side steps, door trims, grille guards and trunk boards, desks, chairs, floats, surfboards, etc.

## Claims

1. A skin-bearing expansion-molded article of a thermoplastic resin, which is formable by holding a cylindrical multi-layer foamed parison comprising a foamed thermoplastic resin layer and thermoplastic polymer layers situated on both outer and inner sides of the foamed layer in a mold to compression-mold it, wherein the molded article has a skin formed of the outer-side polymer layer of the multi-layer foamed parison on the surface thereof, and in the interior of the article, a core formed by fusion-bonding at least a part of the inner-side polymer layer of the multi-layer foamed parison to itself and a foam formed by the foamed layer of the multi-layer foamed parison.

2. The skin-bearing expansion-molded article of the thermoplastic resin according to Claim 1, wherein the thickness of the skin is 100 µm to 10 mm, and the thickness of the core is at least 100 µm.

3. The skin-bearing expansion-molded article of the thermoplastic resin according to Claim 1, wherein the density of the molded article is 20 to 800 kg/m³.

4. The skin-bearing expansion-molded article of the thermoplastic resin according to Claim 1, wherein the area ratio of the fusion-bonded portion in the core is at least 25%.

5. The skin-bearing expansion-molded article of the thermoplastic resin according to Claim 1, wherein the area ratio of the fusion-bonded portion in the core is at least 60%.

6. The skin-bearing expansion-molded article of the thermoplastic resin according to Claim 1, wherein the area ratio of the fusion-bonded portion in the core is 80 to 100%.

7. The skin-bearing expansion-molded article of the thermoplastic resin according to Claim 1, wherein the foam, skin and core are each formed of a polyolefin resin.

8. The skin-bearing expansion-molded article of the thermoplastic resin according to Claim 1, wherein the foam, skin and core are each formed of a polypropylene resin having a melt tension of 5 to 30 cN.

9. The skin-bearing expansion-molded article of the thermoplastic resin according to Claim 1, wherein the thermoplastic polymer forming the skin is at least one selected from among olefin elastomers, styrene elastomers and high-impact polystyrene.

10. A container formed of the skin-bearing expansion-molded article of the thermoplastic resin according to Claim 1 and having a density of 30 to 400 kg/m³, a skin thickness of 200 µm to 3 mm and a core thickness of at least 100 µm.

11. A shock-absorbing material for automobile formed of the skin-bearing expansion-molded article of the thermoplastic resin according to Claim 1 and having a density of 25 to 300 kg/m³, a skin thickness of 200 µm to 7 mm and a core thickness of at least 200 µm.

12. A structural member for automobile formed of the skin-bearing expansion-molded article of the thermoplastic resin according to Claim 1.

13. The structural member for automobile according to Claim 12, which is a member selected from among a bumper, pillar, instrument panel, spoiler, fender, side step, door trim, grille guard and trunk board.

## Patentansprüche

1. Haut tragendes Expansionsformteil aus einem thermoplastischen Harz, formbar durch Halten eines zylindrischen mehrschichtigen geschäumten Hohlkörpers, enthaltend eine geschäumte thermoplastische Harzschicht und Schichten aus thermoplastischen Polymeren sowohl auf der Außen- als auch Innenseite der geschäumten Schicht in einer Form, um diesen mittels Druck zu formen, wobei das Formteil eine Haut aufweist, die auf der außenseitigen Polymerschicht des mehrschichtigen geschäumten Hohlkörpers an dessen Oberfläche ausgebildet ist und im Inneren des Formteils ein Kern ausgebildet ist, der durch Schmelzverbinden von zumindest einen Teil der innenseitigen Polymerschicht des mehrschichtigen geschäumten Hohlkörpers mit sich selbst und einem Schaum aus der geschäumten Schicht des mehrschichtigen geschäumten Hohlkörpers gebildet ist.

2. Haut tragendes Expansionsformteil aus thermoplastischem Harz nach Anspruch 1, wobei die Dicke der Haut 100 µm bis 10 mm und die Dicke des Kerns mindestens 100 µm betragen.

3. Haut tragendes Expansionsformteil aus thermoplastischem Harz nach Anspruch 1, wobei die Dichte des Formteiles 20 bis 800 kg/m³ beträgt.

4. Haut tragendes Expansionsformteil aus thermoplastischem Harz nach Anspruch 1, wobei das Raumverhältnis des schmelzverbundenen Anteils im Kern mindestens 25 % beträgt.

5. Haut tragendes Expansionsformteil aus thermoplastischem Harz nach Anspruch 1, wobei das Raumverhältnis des schmelzverbundenen Anteils im Kern mindestens 60 % beträgt.

6. Haut tragendes Expansionsformteil aus thermoplastischem Harz nach Anspruch 1, wobei das Raumverhältnis des schmelzverbundenen Anteils im Kern 80 bis 100 % beträgt.

7. Haut tragendes Expansionsformteil aus thermoplastischem Harz nach Anspruch 1, wobei der Schaum, die Haut und der Kern jeweils aus einem Polyolefinharz gebildet sind.

8. Haut tragendes Expansionsformteil aus thermoplastischem Harz nach Anspruch 1, wobei der Schaum, die Haut und der Kern jeweils aus einem Polypropylenharz mit einer Schmelzspannung von 5 bis 30 cN gebildet sind.

9. Haut tragendes Expansionsformteil aus thermoplastischem Kunststoff nach Anspruch 1, wobei das die Haut bildende thermoplastische Polymer zumindest eines ausgewählt aus Olefinelastomeren, Styrolelastomeren und schlagzähem Polysterol ist.

10. Behälter, gebildet aus dem Haut tragenden Expansionsformteil aus thermoplastischem Harz nach Anspruch 1 und mit einer Dichte von 30 bis 400 kg/m³, einer Hautdicke von 200 µm bis 3 mm und einer Kerndicke von mindestens 100 µm.

11. Stoßdämpfendes Material für Automobile, gebildet aus dem Haut tragenden Expansionsformteil aus thermoplastischem Harz nach Anspruch 1 und mit einer Dichte von 25 bis 300 kg/m³, einer Hautdicke von 200 µm bis 7 mm und einer Kerndicke von mindestens 200 µm.

12. Strukturbauteil für Automobile, gebildet aus dem Haut tragenden Expansionsformteil aus thermoplastischem Kunststoff nach Anspruch 1.

13. Sturkturbauteil für Automobile nach Anspruch 12, welches ein Bauteil ausgewählt aus einer Stoßstange, einer Säule, einem Instrumentenpaneel, einem Spoiler, einem Kotflügel, einem Seitenschweller, einer Türverkleidung, einer Kühlergrillabdeckung und einer Kofferraumverkleidung ist.

## Revendications

1. Article en résine thermoplastique, moulé avec expansion, portant une peau, que l'on peut former en maintenant une paraison cylindrique multicouche, expansée en mousse, comprenant une couche de résine thermoplastique expansée en mousse et des couches de polymère thermoplastique situées sur la face interne et la face externe de la couche expansée en mousse, dans un moule pour la mouler par compression, l'article moulé présentant sur sa surface une peau formée par la couche de polymère côté externe de la paraison multicouche expansée en mousse, un coeur formé par la liaison à elle-même par fusion d'au moins une partie de la couche de polymère côté interne de la paraison multicouche expansée en mousse, ledit coeur étant situé à l'intérieur de l'article, et une mousse formée par la couche expansée en mousse de la paraison multicouche expansée en mousse.

2. Article en résine thermoplastique, moulé avec expansion, portant une peau, selon la revendication 1, pour lequel l'épaisseur de la peau est de 100 µm à 10 mm et l'épaisseur du coeur est d'au moins 100 µm.

3. Article en résine thermoplastique, moulé avec expansion, portant une peau, selon la revendication 1, dont la masse volumique est de 20 à 800 kg/m³.

4. Article en résine thermoplastique, moulé avec expansion, portant une peau, selon la revendication 1, pour lequel la surface de la partie du coeur liée par fusion représente un pourcentage d'au moins 25 %.

5. Article en résine thermoplastique, moulé avec expansion, portant une peau, selon la revendication 1, pour lequel la surface de la partie du coeur liée par fusion représente un pourcentage d'au moins 60 %.

6. Article en résine thermoplastique, moulé avec expansion, portant une peau, selon la revendication 1, pour lequel la surface de la partie du coeur liée par fusion représente un pourcentage de 80 à 100 %.

7. Article en résine thermoplastique, moulé avec expansion, portant une peau, selon la revendication 1, dont la mousse, la peau et le coeur sont tous constitués d'une résine de polyoléfine.

8. Article en résine thermoplastique, moulé avec expansion, portant une peau, selon la revendication 1, dont la mousse, la peau et le coeur sont tous constitués d'une résine de polypropylène ayant une tension à l'état fondu de 5 à 30 cN.

9. Article en résine thermoplastique, moulé avec expansion, portant une peau, selon la revendication 1, pour lequel le polymère thermoplastique formant la peau est au moins un polymère choisi parmi les élastomères oléfiniques, les élastomères styréniques et le polystyrène à résistance élevée aux chocs.

10. Récipient formé par l'article en résine thermoplastique, moulé avec expansion, portant une peau, selon la revendication 1 et ayant une masse volumique de 30 à 400 kg/m³, une épaisseur de peau de 200 µm à 3 mm et une épaisseur de coeur d'au moins 100 µm.

11. Matériau absorbant les chocs, destiné aux automobiles, formé par l'article en résine thermoplastique, moulé avec expansion, portant une peau, selon la revendication 1 et ayant une masse volumique de 25 à 300 kg/m³, une épaisseur de peau de 200 µm à 7 mm et une épaisseur du coeur d'au moins 200 µm.

12. Elément structural pour automobile, constitué de l'article en résine thermoplastique, moulé avec expansion, portant une peau, selon la revendication 1.

13. Elément structural pour automobile selon la revendication 12, qui est un pare-chocs, un montant, un tableau de bord, un déflecteur, un garde-boue, un marchepied de côté, un châssis de porte, un protège-grille ou un panneau de coffre.
